# EUROPÄISCHE PATENTSCHRIFT

(11) **EP 0 712 750 B1**
(45) Veröffentlichungstag und Bekanntmachung des Hinweises auf die Patenterteilung: **23.12.1998**
(21) Anmeldenummer: 95115533.2
(22) Anmeldetag: 02.10.1995
(51) Int. Cl.: B60J 10/12

(54) **Dachkonstruktion für ein Kraftfahrzeug**
Roof construction for motor vehicle
Construction de toit pour véhicule automobile

(30) Priorität: 15.11.1994 DE 4440730
(43) Veröffentlichungstag der Anmeldung: 22.05.1996
(73) Patentinhaber: Dr.Ing.h.c. F. Porsche Aktiengesellschaft, 70435 Stuttgart (DE)
(72) Erfinder: Homann, Bodo, D-71296 Heimsheim (DE); Bayer, Jürgen, D-71287 Weissach (DE); Nennemann, Harry, D-70771 Leinfelden-Echterdingen (DE); Wikelski, Thomas, D-82266 Schlagenhofen (DE); Mayer, Johann, D-85238 Petershausen (DE)

(56) Entgegenhaltungen:
- EP-A- 0 286 952
- EP-A- 0 442 773
- GB-A- 2 167 357

## Beschreibung

Die Erfindung betrifft eine Dachkonstruktion für ein Kraftfahrzeug nach dem Oberbegriff des Patentanspruchs 1.

Aus der noch nicht veröffentlichten deutschen Patentanmeldung P 43 35 653.2 ist ein Aufbau für einen Personenwagen bekannt, bei dem ein beweglicher zweiter Dachabschnitt mittels geeigneter Kinematik unter einen dritten Dachabschnitt verschiebbar ist. Bei geöffnetem Dach bildet sich durch das Absenken und Verschieben des zweiten Dachabschnitts ein Spalt zwischen beiden Dachabschnitten.

Aufgabe der Erfindung ist es, diese Dachkonstruktion derart weiter auszubilden, daß einem unbedachten Eingreifen in den Spalt, von beispielsweise im Fond des Fahrzeuges sitzenden Insassen mit ihren Fingern entgegengewirkt und die ästhetische Wirkung im Übergangsbereich zwischen den beiden Dachabschnitten verbessert wird.

Erfindungsgemäß wird diese Aufgabe durch die kennzeichnenden Merkmale des Patentanspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß durch die Anbringung einer Schutz- und Abdeckleiste die Insassen gehindert sind, ihre Finger in den Spalt zwischen den zwei Dachabschnitten einzuführen, so daß das Verletzungsrisiko zumindest reduziert ist. Dabei gewährleistet diese Leiste eine organische Abdeckung des Übergangsbereiches zwischen dem zweiten und dritten Dachabschnitt, und zwar innerhalb des Fahrgastraums. Anders ausgedrückt trägt sie zur Optimierung des visuellen Eindrucks bei. Ferner dient die Leiste zur seitlichen Ableitung von in den Spalt zwischen den Dachabschnitten eingedrungenem Wasser von im Bereich der seitlichen Dachrahmen angeordneten Wasserablaufrinnen. Die Schutz- und Abdeckleiste ist kostengünstig herzustellen, einfach zu montieren und funktionssicher.

Die Hinterkante des zweiten und die Vorderkante des dritten Dachabschnitts sind mit Hohlprofilleisten versehen, die zur Verstärkung der Dachkonstruktion, zur Aufnahme von Dichtprofilen und als Anschlag für die einen ersten und einen zweiten Leistenbereich aufweisende Schutz- und Abdeckleiste dienen. Beim Öffnen des Daches wird der zweite Dachabschnitt zunächst so weit abgesenkt, daß er unter der Hohlprofilleiste des dritten Dachabschnitts verschiebbar ist. Dabei entsteht zwischen beiden Dachabschnitten ein Spalt, der durch den sich selbstätig aufstellenden zweiten Leistenbereich im wesentlichen abgedeckt ist.

Die Schutz- und Abdeckleiste kann aus Kunststoff einteilig oder mehrteilig gefertigt sein. Die Vorspannung wird durch geeignete Formgebungen des ein-oder mehrteiligen Kunststoffteils erreicht. Sie kann auch durch entsprechende federnde Einsätze bewerkstelligt werden.

In der Zeichnung wird ein Ausführungsbeispiel der Erfindung gezeigt, das nachstehend näher beschrieben wird.

Es zeigt:
- Fig. 1: eine Seitenansicht des Personenwagens
- Fig. 2: eine Teilansicht mit einem beweglichen Dachabschnitt der Figur 1
- Fig. 3: eine Einzelheit X der Fig. 1 in größerem Maßstab
- Fig. 4: eine Ansicht in Pfeilrichtung Y der Fig. 3

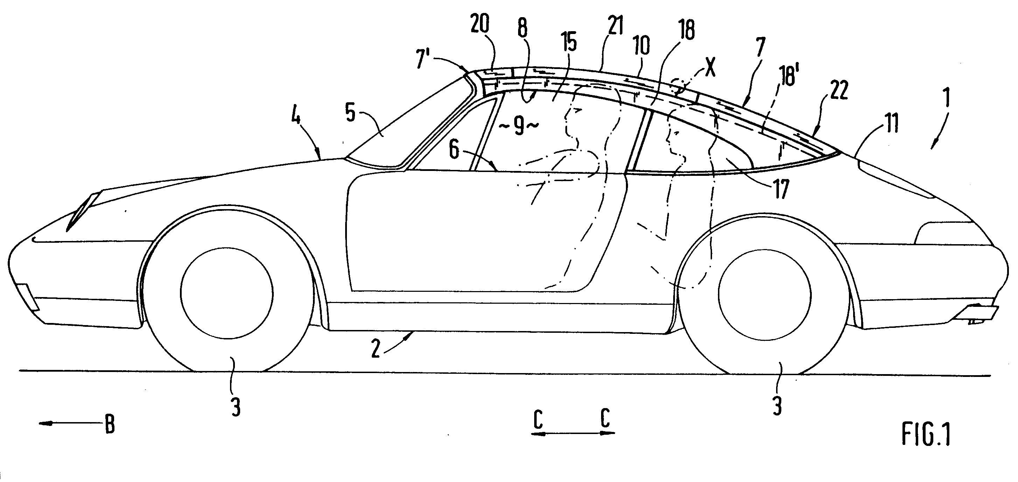

Der Personenwagen 1, gemäß Figur 1 umfaßt einen Aufbau 2, der von Rädern 3 getragen wird. Der Aufbau 2 wird durch einen Grundkörper 4 mit einer Windschutzscheibe 5 und einer Gürtellinie 6 gebildet. Der Grundkörper 4 ist mit einem Aufsatz 7 versehen, der an einen oberen Windschutzscheibenrahmen 7' und die Gürtellinie 6 angeschlossen ist, und mit einem Dachabschnitt 8 einen Fahrgastraum 9 abdeckt. Eine Dachlinie 10, die sich etwa entlang der Mittellängsebene des Personenwagens erstreckt, verläuft zwischen Windschutzscheibenrahmen 7' und einer Heckklappe 11 in einem entgegen der Fahrtrichtung B abfallenden, jedoch durchgängigen Bogen, so daß der Aufbau 2 die Form eines Coupés mit Fließheck aufweist.

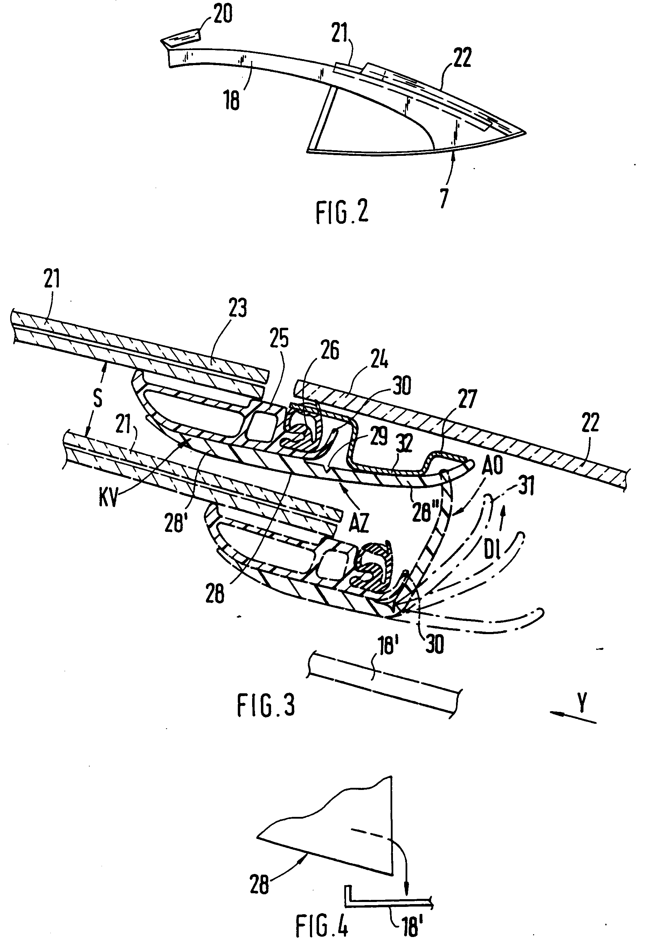

Der Aufsatz 7 besitzt die Seitenfenster 15, 17 begrenzende seitliche Dachrahmen 18, zwischen denen - in Fahrzeuglängsrichtung C-C gesehen - hintereinanderliegend (siehe Figur 2) ein erster Dachabschnitt 20, ein zweiter Dachabschnitt 21 und ein dritter Dachabschnitt 22 vorgesehen sind. Die seitlichen Dachrahmen 18 sind mit Wasserablaufrinnen 18' versehen, deren konstruktive Ausführung beispielhaft in Fig. 4 dargestellt ist. Der erste Dachabschnitt 20 kann als Windabweiser dienen. Der zweite Dachabschnitt 21 ist nach Art eines Schiebedaches längsbeweglich ausgebildet, derart, daß er sich unter den dritten Dachabschnitt 22 verschieben läßt. Der dritte Dachabschnitt 22 ist fest in den Aufsatz 7 eingesetzt.

Figur 3 verdeutlicht die Funktionsweise der Erfindung. Die Hinterkante 23 des zweiten Dachabschnitts 21 und die Vorderkante 24 des dritten Dachabschnitts 22 ist mit Hohlprofilleisten 25, 26 versehen, die zur Verstärkung der Dachkonstruktion dienen. Die Hohlprofilleiste 25 ist durch Kleben am zweiten Dachabschnitt 21 befestigt. Beim Öffnen des Daches wird der zweite Dachabschnitt 21 zunächst so weit abgesenkt, daß dieser unter die Hohlprofilleiste 27 des dritten Dachabschnittes 22 geschoben werden kann. Dabei entsteht zwischen beiden Dachabschnitten ein Spalt S. An der Hohlprofilleiste 25 des zweiten Dachabschnittes 21 ist eine Schutz- und Abdeckleiste 28 mit einem ersten Leistenbereich 28' befestigt. Ein freier, das Ende 23 des Dachabschnitts 21 überragender zweiter Leistenbereich 28'' der Abdeckleiste 28 ist gelenkig am ersten Leistenbereich 28' befestigt und federnd in Richtung DI Dachinnenseite derart nach Art einer Feder vorgespannt, daß der zweite Leistenbereich 28'' bei abgesenktem Dachabschnitt 21 sich selbständig aufstellt und den sich zwischen den Dachabsschnitten 21, 22 bildenden Spalt S abdeckt. Damit das zwischen dem zweiten Dachabschnitt 21 und dem dritten Dachabschnitt 22 eingedrungene Wasser wirkungsvoll abgeleitet wird, erstrecken sich die Enden der Schutz- und Abdeckleiste 28 oberhalb der Wasserablaufrinnen 18'; das abzuführende Wasser folgt in etwa der Pfeilangabe (Fig. 4).

Die Schutz- und Abdeckleiste 28 besteht aus Kunststoff und ist aus einem Stück hergestellt. Die Vorspannung des zweiten Leistenbereichs 28'' wird durch geeignete Formgebung bewirkt. Sie kann durch entsprechend ausgeführte zusätzliche federartige Elemente unterstützt werden. Denkbar ist auch die Schutz- und Abdeckleiste mehrteilig zu gestalten, d.h. die beiden Leistenbereiche 28' und 28'' in getrennten Fertigungsverfahren herzustellen und dann mit einem federnden Element zu verbinden.

Die Hohlprofilleiste 25 trägt mit einer Klebeverbindung KV den ersten Leistenbereich 28'; die Hohlprofilleiste bildet einen Anschlag für den zweiten Leistenbereich 28''.

In geschlossener Stellung des Dachabschnitts 21 liegt der zweite Leistenbereich 28'' am Abschnitt 32 der Hohlprofilleiste 27 an - Arbeitsstellung zu AZ. Bei abgesenktem, bzw. geöffneten Dachabschnitt 21 legt sich der nun aufrecht stehende Leistenbereich 28'' an den Anschlag 30 der Hohlprofilleiste 25 an - Arbeitsstellung offen AO -. Hierdurch ist sichergestellt, daß das Ende 31 des Leistenbereichs 28'' beabstandet zum Dachabschnitt 22 verläuft. Die Ausnehmung 29, deren Form keil- oder U-förmig sein kann - wird empirisch festgelegt -, in der Schutz- und Abdeckleiste 28 ist so gewählt, daß der freie Leistenbereich 28'' am Anschlag 30 zur Anlage kommt.

## Patentansprüche

1. Dachkonstruktion für ein Kraftfahrzeug, bei der ein beweglicher Dachabschnitt (21) nach Absenken unter einen starren Dachabschnitt (22) verschiebbar ist, dadurch gekennzeichnet, daß in Fahrtrichtung (B) gesehen an der Hinterkante (23) des beweglichen Dachabschnitts (21) eine Schutz- und Abdeckleiste (28) angebracht ist, die einen ersten, an der Innenseite des beweglichen Dachabschnitts (21) befestigten Leistenbereich (28') aufweist und einen zweiten, freien, den Dachabschnitt (21) überragenden Leistenbereich (28''), der mit dem ersten Bereich (28') gelenkig verbunden und derart federnd vorgespannt ist, daß der zweite Leistenbereich (28'') bei abgesenktem Dachabschnitt (21) sich selbstätig aufstellt und den sich zwischen dem beweglichen Dachabschnitt (21) und dem starren Dachabschnitt (22) bildenden Spalt (S) abdeckt.

2. Dachkonstruktion nach Anspruch 1, dadurch gekennzeichnet, daß die Schutz-und Abdeckleiste (28) einteilig aus Kunststoff ausgeführt ist.

3. Dachkonstruktion nach Anspruch 1, dadurch gekennzeichnet, daß die Schutz-und Abdeckleiste (28) mehrteilig aus Kunststoff ausgeführt ist.

4. Dachkonstruktion nach Anspruch 1 und 2, dadurch gekennzeichnet, daß die federnde Vorspannung durch die Formgebung der beiden Leistenbereiche (28' und 28'') zueinander bewirkt wird.

5. Dachkonstruktion nach Anspruch 1 bis 3, dadurch gekennzeichnet, daß die federnde Vorspannung durch federnde Elemente bewirkt wird.

6. Dachkonstruktion nach Anspruch 1, und 2, dadurch gekennzeichnet, daß in der Schutz- und Abdeckleiste zwischen den beiden Leistenbereichen (28' und 28'') eine Ausnehmung (29) vorgesehen ist, die eine gezielte Abwinkelung des zweiten Leistenbereichs (28'') vorzugsweise bis zum Anschlag (30) der Hohlprofilleiste (25) ermöglicht.

7. Dachkonstruktion nach Anspruch 6, dadurch gekennzeichnet, daß die Ausnehmung (29) keil- oder U-förmig ist.

8. Dachkonstruktion nach einem der vorhergehenden Ansprüche, dadurch gekennzeichnet, daß sich die Schutz- und Abdeckleiste (28) quer zur Fahrtrichtung des Kraftfahrzeugs bis über in Fahrzeuglängsrichtung verlaufende Wasserablaufrinnen (18') erstreckt.

## Claims

1. A roof structure for a motor vehicle, in which a movable roof portion (21) is displaceable under a rigid roof portion (22) after lowering, **characterized in that** a protecting and covering strip (28) is mounted on the rear edge (23) - as viewed in the direction of travel (**B**) - of the movable roof portion (21), the protecting and covering strip (28) comprising a first area (28') secured to the inside of the movable roof portion (21) and a second, free area (28'') which projects over the roof portion (21) and which is connected to the first area (28') in an articulated manner and is resiliently pre-stressed in such a way that when the roof portion (21) is lowered the second area (28'') of the strip is automatically raised and covers the gap (**S**) formed between the movable roof portion (21) and the rigid roof portion (22).

2. A roof structure according to Claim 1, **characterized in that** the protecting and covering strip (28) is formed in one piece from plastics material.

3. A roof structure according to Claim 1, **characterized in that** the protecting and covering strip (28) is formed in a plurality of pieces from plastics material.

4. A roof structure according to Claims 1 and 2, **characterized in that** the resilient pre-stressing is produced by the shaping of the two areas (28' and 28'') of the strip relative to each other.

5. A roof structure according to Claims 1 to 3, **characterized in that** the resilient pre-stressing is produced by resilient members.

6. A roof structure according to Claims 1 and 2, **characterized in that** a recess (29), which permits a desired bending of the second area (28'') of the strip preferably as far as the stop (30) of the hollow-profile strip (25), is provided in the protecting and covering strip between the two areas (28' and 28'') of the strip.

7. A roof structure according to Claim 6, **characterized in that** the recess (29) is wedge-shaped or U-shaped.

8. A roof structure according to one of the preceding Claims, **characterized in that** the protecting and covering strip (28) extends transversely to the direction of travel of the motor vehicle to beyond water channels (18') extending in the longitudinal direction of the vehicle.

## Revendications

1. Structure de toit pour un véhicule automobile, dans laquelle une partie de toit mobile (21) peut coulisser, après abaissement, sous une partie de toit rigide (22), caractérisée en ce que sur le bord arrière (23), vu dans le sens de marche (B), de la partie de toit mobile (21), est montée une baguette de protection et de recouvrement (28), qui présente une première zone (28') fixée sur le côté intérieur de la partie de toit mobile (21) et une deuxième zone (28'') libre, dépassant de la partie de toit (21), laquelle zone est reliée de manière articulée à la première zone (28') et est précontrainte élastiquement de manière que la deuxième zone (28'') de la baguette se dresse automatiquement, lorsque la partie de toit (21) est abaissée et recouvre la fente (S) se formant entre la partie de toit mobile (21) et la partie rigide (22).

2. Structure de toit selon la revendication 1, caractérisée en ce que la baguette de protection et de recouvrement (28) est réalisée d'une seule pièce en matière plastique.

3. Structure de toit selon la revendication 1, caractérisée en ce que la baguette de protection et de recouvrement (28) est réalisée en plusieurs parties, en matière plastique.

4. Structure de toit selon les revendications 1 et 2, caractérisée en ce que la précontrainte élastique est provoquée par la forme des deux zones (28' et 28'') de la baguette, l'une par rapport à l'autre.

5. Structure de toit selon les revendications 1 à 3, caractérisée en ce que la précontrainte élastique est assurée par des éléments élastiques.

6. Structure de toit selon la revendication 1 et la revendication 2, caractérisée en ce que dans la baguette de protection et de recouvrement il est prévu, entre les deux zones (28' et 28'') de la baguette, un évidement (29), qui permet de couder de manière contrôlée la deuxième zone (28'') de la baguette, de préférence jusqu'à la butée (30) de la baguette profilée creuse (25).

7. Structure de toit selon la revendication 6, caractérisée en ce que l'évidement (29) est en forme de coin ou de U.

8. Structure de toit selon les revendications précédentes, caractérisée en ce que la baguette de protection et de recouvrement (28) s'étend transversalement à la direction de marche du véhicule automobile jusque sur des gouttières d' évacuation d'eau (18'), s'étendant dans la direction longitudinale du véhicule.
